# EUROPÄISCHE PATENTANMELDUNG

(11) **EP 3 045 249 A1**
(43) Veröffentlichungstag der Anmeldung: **20.07.2016**
(21) Anmeldenummer: 15151566.5
(22) Anmeldetag: 19.01.2015
(51) Int. Cl.: B23F 17/00, B23F 19/00, F16H 1/32

(54) **Verfahren zur Herstellung eines innenverzahnten Hohlrads sowie Verfahren zur Herstellung oder zur Reparatur eines Planetengetriebes**

(71) Anmelder: Siemens Aktiengesellschaft, 80333 München (DE)
(72) Erfinder: Klein, Andreas, Dr., 52070 Aachen (DE); Vriesen, Johannes, Dr., 46399 Bocholt (DE)

(57) **Zusammenfassung**

Die Erfindung betrifft ein Verfahren zur Herstellung eines innenverzahnten Hohlrads (5), das gehäusefest in einem Getriebegehäuse eines Planetengetriebes montiert werden soll, wobei das Verfahren den Schritt aufweist, dass über den Umfang des Hohlrads (5) an den Lastflanken (8) der einzelnen Hohlradzähne (7) eine Verzahnungskorrektur vorgenommen wird, dadurch gekennzeichnet, dass das Verfahren den weiteren Schritt aufweist, dass über den Umfang des Hohlrads (5) auch für die Rückflanken (9) der einzelnen Hohlradzähne (7) eine Verzahnungskorrektur vorgenommen wird. Ferner betrifft die Erfindung ein Verfahren zur Herstellung oder zur Reparatur eines ein Getriebegehäuse aufweisenden Planetengetriebes, bei dem ein erfindungsgemäß hergestelltes Hohlrad (5) gehäusefest in dem Getriebegehäuse montiert wird.

## Beschreibung

Die vorliegende Erfindung betrifft ein Verfahren zur Herstellung eines innenverzahnten Hohlrads, das gehäusefest in einem Getriebegehäuse eines Planetengetriebes montiert werden soll, wobei das Verfahren den Schritt aufweist, dass über den Umfang des Hohlrads an den Lastflanken der einzelnen Hohlradzähne eine Verzahnungskorrektur vorgenommen wird. Ferner betrifft die vorliegende Erfindung ein Verfahren zur Herstellung oder zur Reparatur eines ein Getriebegehäuse aufweisenden Planetengetriebes, bei dem ein solches Hohlrad gehäusefest in dem Getriebegehäuse montiert wird.

Die einzelnen Zahnräder eines Planetengetriebe werden während des bestimmungsgemäßen Betriebs normalerweise in einer einzigen betriebsrelevanten Drehrichtung und Drehmomentrichtung betrieben, was dazu führt, dass nur eine der beiden Zahnflanken der jeweiligen Zähne eines Hohlrades genutzt wird, die auch als Lastflanke bezeichnet wird. Die so genannte Rückflanke kommt hingegen nur in nicht angestrebten Betriebszuständen zum Tragen, wie beispielsweise im Reversierbetrieb eines Planetengetriebes einer Windkraftanlage, um nur ein Beispiel zu nennen.

Bei der Herstellung eines innenverzahnten Hohlrads ist es im Stand der Technik bereits bekannt, über den Umfang des Hohlrads an den Lastflanken der einzelnen Zähne eine umfänglich konstante Verzahnungskorrektur vorzunehmen, die dazu dient, verschiedene fertigungs- oder montagebedingte Abweichungen und/oder elastische Verformungen auszugleichen. Solche Verzahnungskorrekturen unterscheiden zwischen Zahnbreiten- und Zahnhöhenrichtung und sind gewollte Abweichungen von der theoretischen Zahnform, beispielsweise von der Evolvente. Hierbei werden Verzahnungen in verschiedenen Parametern korrigiert bzw. modifiziert, um positive Effekte während des Zahneingriffs zu erreichen. Zum Beispiel kann eine Verzahnungskorrektur auf ein möglichst gleichmäßiges Tragen der Belastung in Zahnbreitenrichtung und/oder auf eine möglichst geringe Anregung aus dem Zahnkraftverlauf in Zahnhöhenrichtung abzielen, um Geräusche zu reduzieren und/oder Schwingungen zu mindern.

Im Rahmen von Instandsetzungsarbeiten müssen verschlissene Lastflanken eines Hohlrads ggf. überarbeitet werden, um auch weiterhin einen ordnungsgemäßen Betrieb des Planetengetriebes zu gewährleisten. Ist ein solches Überarbeiten nicht mehr möglich oder wirtschaftlich betrachtet nicht mehr sinnvoll, so wird das Hohlrad durch ein neues Hohlrad ersetzt.

Ausgehend von diesem Stand der Technik ist es eine Aufgabe der vorliegenden Erfindung, alternative Verfahren der eingangs genannten Art zu schaffen.

Zur Lösung dieser Aufgabe schafft die vorliegende Erfindung ein Verfahren zur Herstellung eines innenverzahnten Hohlrads der eingangs genannten Art, das dadurch gekennzeichnet ist, dass das Verfahren den weiteren Schritt aufweist, dass über den Umfang des Hohlrads auch für die Rückflanken der einzelnen Hohlradzähne eine Verzahnungskorrektur vorgenommen wird. Dank der Tatsache, dass bei der erfindungsgemäßen Hohlradherstellung auch die Rückflanken der einzelnen Zähne einer Verzahnungskorrektur unterzogen werden, ist es möglich, das Hohlrad im Rahmen von Wartungs- oder Instandsetzungsarbeiten zu wenden, indem das Hohlrad demontiert, um 180° um eine radiale Achse gedreht und dann erneut gehäusefest im Getriebegehäuse montiert wird, so dass diejenigen Zahnflanken, die zuvor die Rückflanken bildeten, nunmehr die Lastflanken bilden. Entsprechend kann die Lebensdauer eines Hohlrades unter Beibehaltung der Verzahnungsqualität der Lastflanken verdoppelt werden.

Gemäß einer Ausgestaltung der vorliegenden Erfindung wird jede Verzahnungskorrektur gezielt unterschiedlich über den Umfang des Hohlrads derart vorgenommen, dass zumindest lastbedingte Verformungen und/oder Schiefstellungen der Hohlradzähne aufgrund von Gewichtslasten eines oder mehrerer Getriebeteile wenigstens teilweise kompensiert werden. Die Verzahnungskorrektur wird also nicht konstant entlang des Umfangs des Hohlrads vorgenommen. Vielmehr wird die Verzahnungskorrektur lokal entlang des Umfangs variiert, womit lokal unterschiedlichen elastischen Verformungen der Hohlradzähne und des Hohlradkranzes Rechnung getragen wird.

Bei den Verzahnungskorrekturen können Steifigkeitsunterschiede zwischen dem Hohlrad und einer an diesem angebrachten Drehmomentabstützung berücksichtigt werden. Alternativ oder zusätzlich kann bei der Verzahnungskorrektur eine Verformung eines Planetenträgers des Planetengetriebes berücksichtigt werden, insbesondere eine torsionsbedingte Verformung, da diese eine maßgebliche Größe zur Abstimmung der Verzahnungskorrektur in Zahnbreitenrichtung darstellt. Ferner kann die Verzahnungskorrektur eine den nominellen Schrägungswinkel gezielt modifizierende Flankenlinien-Winkelkorrektur umfassen.

Bevorzugt sind die Zahnflankenkorrekturen, die für die Lastflanken und die Rückflanken vorgenommen werden, jeweils punksymmetrisch. Somit entsprechen die Zahnflankenkorrekturen einander, wenn das Hohlrad um 180° um eine radiale Achse gedreht wird.

Gemäß einer Ausgestaltung der vorliegenden Erfindung werden die Verzahnungskorrekturen für die Lastflanken und die Rückflanken der Zähne zeitgleich durchgeführt, insbesondere durch einen Zweiflankenschliff auf einer Profilschleifmaschine. Auf diese Weise kann die für die Durchführung der Verzahnungskorrekturen erforderliche Zeitdauer reduziert werden.

Bevorzugt wird das Hohlrad mit zumindest einer die bestimmungsgemäße Einbauposition kennzeichnenden Markierung versehen. Dies ist insbesondere dann von großer Bedeutung, wenn die Verzahnungskorrekturen über den Umfang des Hohlrads nicht konstant sind.

Ferner ist eine benachbart zum Hohlrad angeordnete gehäusefeste Getriebekomponente oder das Getriebegehäuse selbst bevorzugt mit einer weiteren die bestimmungsgemäße Einbauposition des Hohlrads kennzeichnenden Markierung versehen.

Vorteilhaft wird das Hohlrad beidseitig jeweils mit einer Flanschverbindung versehen, die zur Befestigung des Hohlrads an dem Getriebegehäuse dient, wobei die Flanschverbindungen vorteilhaft derart korrespondierend ausgebildet werden, dass das Hohlrad im Rahmen von Wartungsarbeiten nachbearbeitungsfrei um 180° um eine vorab definierte radiale Achse gedreht an dem Getriebegehäuse montiert werden kann. Entsprechend kann ein Wenden des Hohlrads schnell und problemlos durchgeführt werden, wodurch die Wartungsdauer verkürzt wird.

Zur Lösung der eingangs genannten Aufgabe schafft die vorliegende Erfindung ferner ein Verfahren zur Herstellung oder zur Reparatur eines ein Getriebegehäuse aufweisenden Planetengetriebes, das dadurch gekennzeichnet ist, dass ein gemäß des erfindungsgemäßen Verfahrens hergestelltes Hohlrad gehäusefest in dem Getriebegehäuse montiert wird.

Weitere Merkmale und Vorteile der vorliegenden Erfindung werden anhand der nachfolgenden Beschreibung eines Verfahrens gemäß einer Ausführungsformen der vorliegenden Erfindung unter Bezugnahme auf die beiliegende Zeichnung deutlich. Darin ist
- Figur 1: eine schematische geschnittene Draufsicht eines Teils eines Triebstrangs einer Windkraftanlage; und
- Figur 2: eine vergrößerte schematische Teildraufsicht auf die Innenverzahnung eines Hohlrades des in Figur 1 dargestellte Triebstranges.

Der Triebstrang einer Windkraftanlage umfasst als Hauptkomponenten normalerweise einen Rotor, eine Rotorwelle, ein Getriebe, eine Kupplung und einen Generator.

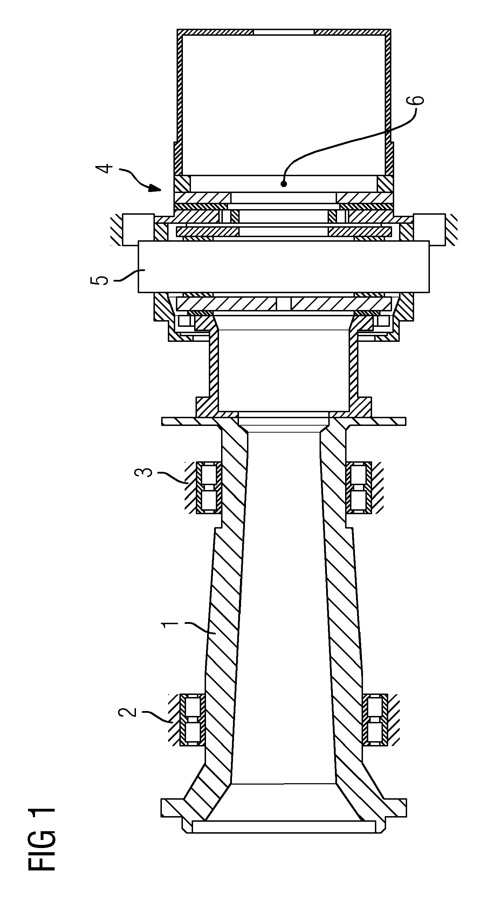

Figur 1 zeigt beispielhaft einen vereinfacht skizzierten Teil eines solchen Triebstranges mit einer Rotorwelle 1, die mittels zwei Lagerungen 2 und 3 gelagert ist, und einem an die Rotorwelle 1 angeschlossenen Getriebe 4, das wiederum über ein Kupplung mit einem nicht näher dargestellten Generator verbunden ist. Das Getriebe 4 umfasst eine Getriebehauptstufe, die als Planetenradstufe ausgeführt ist und ein gehäusefestes Hohlrad 5 aufweist. Unmittelbar benachbart zum Hohlrad 5 ist das Getriebe 4 zur Drehmomentabstützung mit einem Grundrahmen der Windkraftanlage verbunden und stellt eine Art vertikale Last am getriebeseitigen Ende der Rotorwelle 1 dar. Je nach tatsächlicher Ausführung kommt es vor, dass der Schwerpunkt 6 des Getriebes 4, der nicht unmittelbar mit der Rotorwelle 1 verbunden ist, außerhalb des Bereiches der Drehmomentabstützung liegt. Für diesen Fall ergeben sich Lasten, die ursächlich aus diesem Gewichtsanteil resultieren, im Wesentlichen von der Rotorwelle 1 getragen werden und sich in der Regel durch Querkraftkomponenten darstellen lassen. Diese Querkraftkomponenten muss das System ebenfalls abstützen. Innerhalb der Getriebehauptstufe kann es dazu kommen, dass die Rotationsachse desjenigen Getriebeteils, der mit der Rotorwelle 1 direkt verbunden ist, und die Mittelachse des gehäusefesten Getriebeteils nicht deckungsgleich sind, die Achsen also nicht miteinander fluchten. Hierdurch ergeben sich Verformungen und hauptsächlich vertikale Schiefstellungen im System, die sich entlang des Umfangs des Hohlrads 5 lokal verschieden auf den Zahnkontakt auswirken und mit unterschiedlichen elastischen Verformungen der Hohlradzähne 7 entlang des Hohlradumfangs und des Hohlradkranzes einhergehen.

Zur Kompensation solcher lastbedingter Verformungen und/oder Schiefstellungen der Hohlradzähne 7, die auf auftretende Querkräfte zurückzuführen sind, die nicht über eine Drehmomentabstützung oder dergleichen aufgenommen werden können, insbesondere auf Querkräfte, die auf Gewichtslasten des Getriebes 4 zurückzuführen sind, wird bei einem Verfahren gemäß einer Ausführungsform der vorliegenden Erfindung eine Verzahnungskorrektur der Hohlradverzahnung gezielt unterschiedlich und damit positionsabhängig über den Umfang des Hohlrads 5 an den Lastflanken 8 der einzelnen Hohlradzähne 7 vorgenommen, um die Lasten gleichmäßig über den Umfang des Hohlrads 5 zu verteilen. Bei der Verzahnungskorrektur wird insbesondere eine den nominellen Schrägungswinkel gezielt modifizierende, entlang des Umfangs lokal veränderliche Flankenlinien-Winkelkorrektur durchgeführt.

Die Verzahnungskorrektur wird für einen vorbestimmten Betriebspunkt festgelegt, wobei sie derart zu wählen ist, dass für den gesamten Betriebsbereich zumindest tragbare Lastverteilungen und Lastaufteilungen für die Verzahnungen und indirekt auch für die Lager gewährleistet sind, insbesondere für die Lager der Planetenräder. Ferner sollte die Verzahnungskorrektur derart ausgelegt werden, dass auch Steifigkeitsunterschiede zwischen dem Hohlrad 5 und der daran angebrachten Drehmomentabstützung berücksichtigt werden, ebenso wie eine Verformung des Planetenträgers des Getriebes 4, insbesondere eine torsionsbedingte Verformung. Für die Fertigung des Hohlrads 5 ist nach erfolgter Auslegung eine Fertigungszeichnung mit den erforderlichen geometrischen Daten und Verzahnungsparametern zu erstellen. Dabei sind auch Zeichnungseintragungen vorzunehmen, die den geometrischen Daten die entsprechende Umfangsposition zuordnen. Um sicherzustellen, dass das Hohlrad 5 nach erfolgter Verzahnungskorrektur ordnungsgemäß montiert werden kann, wird dieses bevorzugt mit einer die bestimmungsgemäße Einbauposition des Hohlrads 5 kennzeichnenden Markierung versehen. Zusätzlich kann eine benachbart zum Hohlrad 5 angeordnete gehäusefeste Getriebekomponente oder das Getriebegehäuse selbst mit einer weiteren die bestimmungsgemäße Einbauposition des Hohlrads 5 kennzeichnenden Markierung versehen werden, wobei die Markierungen beim Einbau des Hohlrads 5 miteinander fluchtend anzuordnen sind.

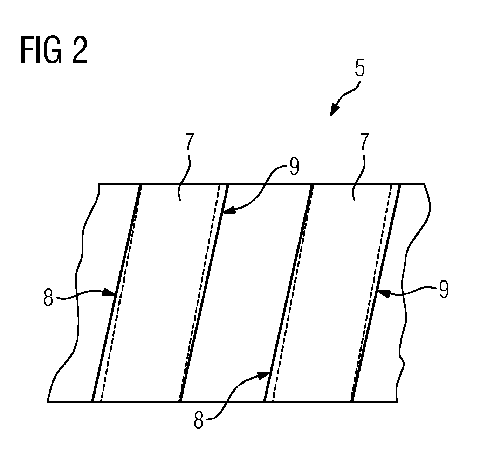

Bei dem erfindungsgemäßen Verfahren werden allerdings nicht nur die Lastflanken 8 sondern auch die Rückflanken 9 jedes Hohlradzahns 7 einer Verzahnungskorrektur der zuvor beschriebenen Art unterzogen, wie es in Figur 2 dargestellt ist, wobei die durchgezogenen Linien die unkorrigierten Flanken und die gestrichelten Linien die korrigierten Flanken symbolisieren. Die Durchführung der Verzahnungskorrektur an den Rückflanken 9 ermöglicht die Verwendung des Hohlrads 5 als Wendehohlrad unter Beibehaltung der gewünschten Hohlradzahngeometrien. Entsprechend kann das Hohlrad 5, wenn die Lastflanken 8 des Hohlrads 5 einen unzulässigen Verschleiß aufweisen, im Rahmen von Wartungsarbeiten derart gewendet werden, dass diejenigen Flanken, die ursprünglich die Rückflanken bildeten, anschließend die Lastflanken definieren und umgekehrt, womit verschleißfreie Lastflanken bereitgestellt werden. Die Verzahnungskorrekturen an den Lastflanken 8 und an den Rückflanken 9 der Hohlradzähne 7 werden vorteilhaft zeitgleich durchgeführt, beispielsweise durch einen Zweiflankenschliff auf einer Profilschleifmaschine. Auf diese Weise kann die für die Durchführung der Verzahnungskorrekturen erforderliche Zeitdauer reduziert werden.

Ferner entsprechen die jeweiligen Verzahnungskorrekturen an Lastflanke 8 und Rückflanke 9 bevorzugt einander, sind also punktsymmetrisch ausgeführt, so dass die Ausbildung von Lastflanke und Rückflanke unabhängig vom Wendezustand des Hohlrades 5 quasi identisch ist.

Um ein einfaches Wenden des Hohlrads 5 zu ermöglichen, wird das Hohlrad 5 während seiner Herstellung beidseitig jeweils mit einer vorliegend nicht näher dargestellten Flanschverbindung versehen, die zur Befestigung des Hohlrads 5 an dem Getriebegehäuse dient, wobei die Flanschverbindungen derart korrespondierend ausgebildet werden, dass eine Montage des gewendeten Hohlrads 5 ohne Anpassungs- oder Nacharbeiten möglich sein kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere kann die Verzahnungskorrektur der Last- und Rückflanken über den Umfang des Hohlrads 5 grundsätzlich auch kontinuierlich erfolgen, also ohne lokale Variationen, auch wenn eine lokal gezielt unterschiedliche Verzahnungskorrektur bevorzugt wird.

## Patentansprüche

1. Verfahren zur Herstellung eines innenverzahnten Hohlrads (5), das gehäusefest in einem Getriebegehäuse eines Planetengetriebes montiert werden soll, wobei das Verfahren den Schritt aufweist, dass über den Umfang des Hohlrads (5) an den Lastflanken (8) der einzelnen Hohlradzähne (7) eine Verzahnungskorrektur vorgenommen wird, **dadurch gekennzeichnet, dass** das Verfahren den weiteren Schritt aufweist, dass über den Umfang des Hohlrads (5) auch für die Rückflanken (9) der einzelnen Hohlradzähne (7) eine Verzahnungskorrektur vorgenommen wird.

2. Verfahren nach Anspruch 1, **dadurch gekennzeichnet, dass** jede Verzahnungskorrektur gezielt unterschiedlich über den Umfang des Hohlrads (5) derart vorgenommen wird, dass zumindest lastbedingte Verformungen und/oder Schiefstellungen der Hohlradzähne (7) aufgrund von Gewichtslasten eines oder mehrerer Getriebeteile wenigstens teilweise kompensiert werden.

3. Verfahren nach Anspruch 1 oder 2, **dadurch gekennzeichnet, dass** Verzahnungskorrekturen, die für die Lastflanken (8) und für die Rückflanken (9) vorgenommen werden, jeweils punktsymmetrisch sind.

4. Verfahren nach einem der vorhergehenden Ansprüche, **dadurch gekennzeichnet, dass** die Verzahnungskorrekturen für die Lastflanken (8) und die Rückflanken (9) zeitgleich durchgeführt werden, insbesondere durch einen Zweiflankenschliff auf einer Profilschleifmaschine.

5. Verfahren nach einem der vorhergehenden Ansprüche, **dadurch gekennzeichnet, dass** das Hohlrad (5) mit zumindest einer die bestimmungsgemäße Einbauposition kennzeichnenden Markierung versehen wird.

6. Verfahren nach Anspruch 5, **dadurch gekennzeichnet, dass** auch eine benachbart zum Hohlrad (5) angeordnete gehäusefeste Getriebekomponente oder das Getriebegehäuse selbst mit einer weiteren die bestimmungsgemäße Einbauposition des Hohlrads kennzeichnenden Markierung versehen wird.

7. Verfahren nach einem der vorhergehenden Ansprüche, **dadurch gekennzeichnet, dass** das Hohlrad (5) beidseitig jeweils mit einer Flanschverbindung versehen wird, die zur Befestigung des Hohlrads (5) an dem Getriebegehäuse dient.

8. Verfahren nach Anspruch 7, **dadurch gekennzeichnet, dass** die Flanschverbindungen derart korrespondierend ausgebildet werden, dass das Hohlrad (5) im Rahmen von Wartungsarbeiten nachbearbeitungsfrei um 180° um eine vorab definierte radiale Achse gedreht an dem Getriebegehäuse montiert werden kann.

9. Verfahren zur Herstellung oder zur Reparatur eines ein Getriebegehäuse aufweisenden Planetengetriebes, **dadurch gekennzeichnet, dass** ein gemäß einem Verfahren nach einem der vorhergehenden Ansprüche hergestelltes Hohlrad (5) gehäusefest in dem Getriebegehäuse montiert wird.
